# EUROPEAN PATENT APPLICATION

(11) **EP 4 813 776 A1**
(43) Date of publication of application: **30.09.2026**
(21) Application number: 24910504.0
(22) Date of filing: 28.11.2024
(51) Int. Cl.: B60W 30/06, B60W 30/08, B60W 60/00

(54) **INTELLIGENT DRIVING METHOD, INTELLIGENT DRIVING APPARATUS, AND INTELLIGENT DRIVING DEVICE**

(30) Priority: 28.12.2023 CN 202311852226
(71) Applicant: Yinwang Intelligent Technologies Co., Ltd., Shenzhen, Guangdong 518110 (CN)
(72) Inventor: SHAN, Jin, Shenzhen, Guangdong 518110 (CN); SHEN, Yujie, Shenzhen, Guangdong 518110 (CN); JIANG, Yu, Shenzhen, Guangdong 518110 (CN)
(74) Representative: MERH-IP Matias Erny Reichl Hoffmann Patentanwälte PartG mbB
(86) International application number: PCT/CN2024/135079
(87) International publication number: WO 2025/139571

(57) **Abstract**

An intelligent driving method, an apparatus, and an intelligent driving device are provided. The method includes: determining at least two types of temporary parking spaces based on surrounding obstacle information of the intelligent driving device and surrounding environment information of the intelligent driving device, where the environment information includes parking space information and/or road structure information, the at least two types of temporary parking spaces include a first-type parking space and a second-type parking space, the first-type parking space is a parking space generated based on the obstacle information, and the second-type parking space is a parking space generated based on the parking space information and/or the road structure information; and controlling the intelligent driving device to park into a target temporary parking space, where the at least two types of temporary parking spaces include the target temporary parking space. The technical solutions of this application may be applied to the field of intelligent vehicles, for example, electric vehicles and new energy vehicles. When a vehicle encounters scenarios, for example, meeting oncoming traffic in a narrow lane or avoiding obstacles, a more appropriate temporary parking location can be determined. This improves a human-like nature and intelligence of the vehicle.

## Description

This application claims priority to Chinese Patent Application No. 202311852226.X, filed with the China National Intellectual Property Administration on December 28, 2023 and entitled "INTELLIGENT DRIVING METHOD, APPARATUS FOR INTELLIGENT DRIVING, AND INTELLIGENT DRIVING DEVICE", which is incorporated herein by reference in its entirety.

### TECHNICAL FIELD

This application relates to the field of intelligent vehicles, and more specifically, to an intelligent driving method, an apparatus for intelligent driving, and an intelligent driving device.

### BACKGROUND

With rapid development of the automotive industry, numerous assisted driving technologies and autonomous driving technologies have emerged, which can reduce driving pressure and improve safety and traffic efficiency. In a process of traveling or parking in an autonomous driving mode, a vehicle may encounter constrained operating scenarios, for example, meeting oncoming traffic in a narrow lane or avoiding obstacles. In the foregoing scenarios, obstacles may block the vehicle in automatic parking, and cause the automatic parking procedure to terminate, leaving the vehicle stranded on a road and obstructing traffic.

In view of this, there is an urgent need to develop an intelligent driving solution that can improve vehicle flexibility.

### SUMMARY

This application provides an intelligent driving method, an apparatus for intelligent driving, and an intelligent driving device. When a vehicle encounters scenarios, for example, meeting oncoming traffic in a narrow lane or avoiding obstacles, a more appropriate temporary parking location can be determined. This improves a human-like nature and intelligence of the vehicle, and helps reduce a probability of obstructing traffic due to stranding of the vehicle caused by blocking of an obstacle.

According to a first aspect, an intelligent driving method is provided. The method may be performed by an intelligent driving device, or may be performed by a computing platform of an intelligent driving device, or may be performed by a chip or a circuit disposed on a computing platform. The method includes: determining at least two types of temporary parking spaces based on surrounding obstacle information of an intelligent driving device and surrounding environment information of the intelligent driving device, where the environment information include parking space information and/or road structure information; and the at least two types of temporary parking spaces include at least one of a first-type parking space, a second-type parking space, and a third-type parking space, the first-type parking space is a parking space generated based on the obstacle information, the second-type parking space is a parking space generated based on the environment information, and the third-type parking space is an empty parking space determined based on the parking space information; and controlling the intelligent driving device to park into a target temporary parking space, where the at least two types of temporary parking spaces include the target temporary parking space.

In some implementations, the at least two types of temporary parking spaces include the first-type parking space and the second-type parking space.

In the foregoing technical solution, a plurality of types of parking spaces may be determined as candidate parking spaces for temporary parking of the intelligent driving device based on the surrounding obstacle information and/or the surrounding environment information of the intelligent driving device, so that when the intelligent driving device is blocked by an obstacle in a traveling or parking process, there can be more temporary parking choices, and the obstacle is avoided in a more flexible and human-like manner.

With reference to the first aspect, in some implementations of the first aspect, the method further includes: determining a first obstacle based on the obstacle information, where the first obstacle is an obstacle that is in a first area and that is closest to the intelligent driving device; and the first area is located directly in front of the intelligent driving device and/or the first area is located in a front side away from a driver side of the intelligent driving device, or the first area is located directly behind the intelligent driving device and/or the first area is located in a rear side away from a driver side of the intelligent driving device; and generating a first temporary parking space based on the first obstacle, where the first temporary parking space is located between the first obstacle and the intelligent driving device, a distance between the first temporary parking space and the first obstacle is greater than or equal to a first distance threshold and is less than a second distance threshold, and the first temporary parking space is the first-type parking space.

In the foregoing technical solution, determining the temporary parking space based on the direct front or the direct rear of the vehicle, or the front side or the rear side away from the driver side helps improve a human-like nature when the intelligent driving device avoids an obstacle.

With reference to the first aspect, in some implementations of the first aspect, when the first obstacle is a vehicle, a central axis of the first temporary parking space is parallel to a central axis of the first obstacle, or an included angle between a central axis of the first temporary parking space and a central axis of the first obstacle is less than or equal to a first angle threshold.

In the foregoing technical solution, when the obstacle is the vehicle, the central axis of the generated temporary parking space is parallel to or at an included angle less than a specific threshold with the central axis of the vehicle. After the intelligent driving device is parked into the temporary parking space, the intelligent driving device is parked out more smoothly and conveniently.

In some implementations, when the first obstacle is an obstacle other than a vehicle, a central axis of the first temporary parking space is parallel to a central axis of the intelligent driving device, or an included angle between a central axis of the first temporary parking space and a central axis of the intelligent driving device is less than or equal to an angle threshold. This helps reduce difficulty of parking the intelligent driving device into the temporary parking space.

With reference to the first aspect, in some implementations of the first aspect, a distance between the first temporary parking space and a first road boundary is greater than a distance between the first temporary parking space and a second road boundary, the first road boundary is a boundary close to a driver seat of the intelligent driving device, and the second road boundary is a boundary close to a front passenger seat of the intelligent driving device.

In the foregoing technical solution, generating a temporary parking space closer to a front passenger side based on an obstacle complies with a traffic rule. Parking the intelligent driving device into the temporary parking space helps reduce obstruction to road traffic, and also conforms to a habit of selecting a temporary parking space by a human driver.

With reference to the first aspect, in some implementations of the first aspect, the method further includes: determining a third road boundary based on the parking space information and/or the road structure information; and generating a second temporary parking space based on the third road boundary, where the second temporary parking space is located in front of or behind the intelligent driving device, the second temporary parking space does not overlap or partially overlaps a current location of the intelligent driving device, a distance between the second temporary parking space and the third road boundary is greater than or equal to a third distance threshold and is less than a fourth distance threshold, and the second temporary parking space is the second-type parking space.

In the foregoing technical solution, determining a temporary parking space based on a road boundary is similar to a habit of selecting a temporary parking space by the human driver, and helps improve a human-like nature and intelligence of the intelligent driving device.

With reference to the first aspect, in some implementations of the first aspect, a central axis of the second temporary parking space is parallel to a central axis of the intelligent driving device, or an included angle between a central axis of the second temporary parking space and a central axis of the intelligent driving device is less than or equal to a second angle threshold.

In the foregoing technical solution, determining a pose of the temporary parking space based on the central axis of the intelligent driving device helps reduce difficulty of parking the intelligent driving device into the temporary parking space.

With reference to the first aspect, in some implementations of the first aspect, a distance between the third road boundary and the driver seat of the intelligent driving device is greater than a distance between the third road boundary and the front passenger seat of the intelligent driving device.

In the foregoing technical solution, generating a temporary parking space closer to a front passenger side based on a road boundary complies with a traffic rule. Parking the intelligent driving device into the temporary parking space helps reduce obstruction to road traffic, and also conforms to a habit of selecting a temporary parking space by the human driver.

With reference to the first aspect, in some implementations of the first aspect, the determining the at least two types of temporary parking spaces includes: determining the at least two types of temporary parking spaces when the intelligent driving device meets a target vehicle.

In some implementations, the target parking space may be used as the first obstacle.

In the foregoing technical solution, in a process in which the intelligent driving device meets a vehicle, a procedure of the intelligent driving method in this application is started, to help improve intelligence and a human-like nature of the intelligent driving device in the process in which the intelligent driving device meets the vehicle, and improve vehicle meeting efficiency and safety.

With reference to the first aspect, in some implementations of the first aspect, before controlling the intelligent driving device to park into the target temporary parking space, the method further includes: determining the target temporary parking space based on a degree of blockage that each of the at least two types of temporary parking spaces causes to a road on which the intelligent driving device is located.

With reference to the first aspect, in some implementations of the first aspect, the method further includes: controlling a display apparatus to display the at least two types of temporary parking spaces.

For example, the display apparatus may be a human-machine interface (human-machine interface, HMI) of the intelligent driving device, or may be another vehicle-mounted display.

In the foregoing technical solution, displaying the at least two types of temporary parking spaces can inform a user that a temporary parking event is occurring, to improve interaction between the user and the intelligent driving device in a temporary parking process, and help improve driving and ride experience of the user.

According to a second aspect, an apparatus for intelligent driving is provided. The apparatus includes: a determining unit, configured to determine at least two types of temporary parking spaces based on surrounding obstacle information of an intelligent driving device and surrounding environment information of the intelligent driving device, where the environment information include parking space information and/or road structure information; and at least one temporary parking space includes at least one of a first-type parking space, a second-type parking space, and a third-type parking space, the first-type parking space is a parking space generated based on the obstacle information, the second-type parking space is a parking space generated based on the parking space information and/or the road structure information, and the third-type parking space is an empty parking space determined based on the parking space information; and a processing unit, configured to control the intelligent driving device to park into a target temporary parking space, where the at least two types of temporary parking spaces include the target temporary parking space.

With reference to the second aspect, in some implementations of the second aspect, the determining unit is further configured to: determine a first obstacle based on the obstacle information, where the first obstacle is an obstacle that is in a first area and that is closest to the intelligent driving device; and the first area is located directly in front of the intelligent driving device and/or the first area is located in a front side away from a driver side of the intelligent driving device, or the first area is located directly behind the intelligent driving device and/or the first area is located in a rear side away from a driver side of the intelligent driving device. The apparatus further includes a generation unit, configured to generate a first temporary parking space based on the first obstacle, where the first temporary parking space is located between the first obstacle and the intelligent driving device, a distance between the first temporary parking space and the first obstacle is greater than or equal to a first distance threshold and is less than a second distance threshold, and the first temporary parking space is the first-type parking space.

With reference to the second aspect, in some implementations of the second aspect, when the first obstacle is a vehicle, a central axis of the first temporary parking space is parallel to a central axis of the first obstacle, or an included angle between a central axis of the first temporary parking space and a central axis of the first obstacle is less than or equal to a first angle threshold.

With reference to the second aspect, in some implementations of the second aspect, the first obstacle is a vehicle whose traveling direction is opposite to a traveling direction of the intelligent driving device.

With reference to the second aspect, in some implementations of the second aspect, a distance between the first temporary parking space and a first road boundary is greater than a distance between the first temporary parking space and a second road boundary, the first road boundary is a boundary close to a driver seat of the intelligent driving device, and the second road boundary is a boundary close to a front passenger seat of the intelligent driving device.

With reference to the second aspect, in some implementations of the second aspect, the determining unit is further configured to: determine a third road boundary based on the parking space information and/or the road structure information. The apparatus further includes the generation unit, configured to generate a second temporary parking space based on the third road boundary, where the second temporary parking space is located in front of or behind the intelligent driving device, the second temporary parking space does not overlap or partially overlaps a current location of the intelligent driving device, a distance between the second temporary parking space and the third road boundary is greater than or equal to a third distance threshold and is less than a fourth distance threshold, and the second temporary parking space is the second-type parking space.

With reference to the second aspect, in some implementations of the second aspect, a central axis of the second temporary parking space is parallel to a central axis of the intelligent driving device, or an included angle between a central axis of the second temporary parking space and a central axis of the intelligent driving device is less than or equal to a second angle threshold.

With reference to the second aspect, in some implementations of the second aspect, a distance between the third road boundary and the driver seat of the intelligent driving device is greater than a distance between the third road boundary and the front passenger seat of the intelligent driving device.

With reference to the second aspect, in some implementations of the second aspect, the determining unit is further configured to: before the processing unit controls the intelligent driving device to park into the target temporary parking space, determine the target temporary parking space based on a degree of blockage that each of the at least two types of temporary parking spaces causes to a road on which the intelligent driving device is located.

With reference to the second aspect, in some implementations of the second aspect, the processing unit is further configured to: control a display apparatus to display the at least two types of temporary parking spaces.

According to a third aspect, an apparatus for intelligent driving is provided. The apparatus includes: a memory, configured to store a computer program; and a processor, configured to execute the computer program stored in the memory, to enable the apparatus to perform the method according to any possible implementations of the first aspect.

According to a fourth aspect, an intelligent driving device is provided. The intelligent driving device includes the apparatus according to any possible implementation of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be completely or partially stored in a first storage medium. The first storage medium may be encapsulated together with a processor, or encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a functional block diagram of an intelligent driving device according to an embodiment of this application;
FIG. 2 is a diagram of an architecture of an intelligent driving system according to an embodiment of this application;
FIG. 3 is a schematic flowchart of an intelligent driving method according to an embodiment of this application;
FIG. 4 is a diagram of an application scenario of an intelligent driving method according to an embodiment of this application;
FIG. 5 is another diagram of an application scenario of an intelligent driving method according to an embodiment of this application;
FIG. 6 is another schematic flowchart of an intelligent driving method according to an embodiment of this application;
FIG. 7 is a block diagram of an apparatus for intelligent driving according to an embodiment of this application; and
FIG. 8 is another block diagram of an apparatus for intelligent driving according to an embodiment of this application.

### DESCRIPTION OF EMBODIMENTS

To facilitate understanding of the solutions in embodiments of this application, concepts in this application are described.

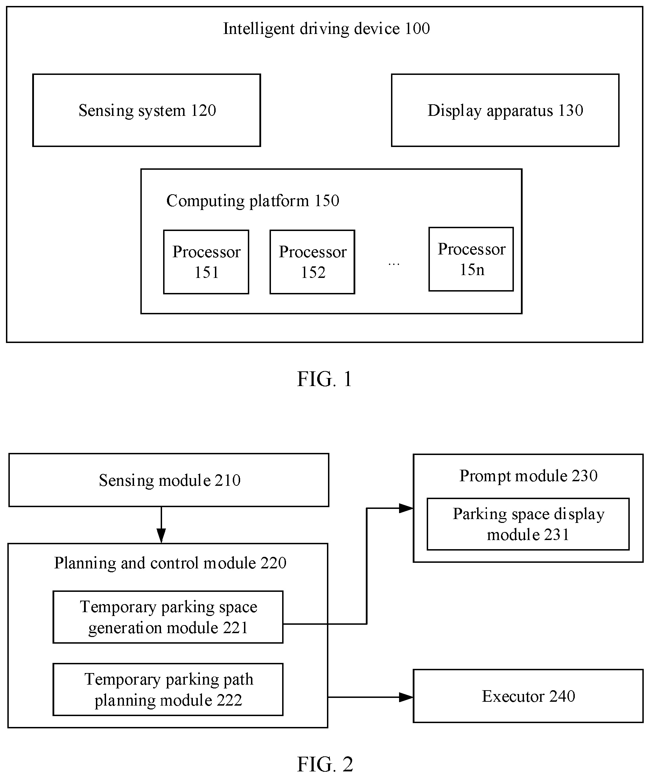

FIG. 1 is a functional block diagram of an intelligent driving device according to an embodiment of this application. As shown in FIG. 1, the intelligent driving device 100 may include a sensing system 120, a display apparatus 130, and a computing platform 150. The sensing system 120 may include several sensors configured to sense surrounding environment information of the intelligent driving device 100. For example, the sensing system 120 may include a positioning system. The positioning system may be a global positioning system (global positioning system, GPS), a BeiDou system, or another positioning system. For another example, the sensing system 120 may further include one or more of the following: an inertial measurement unit (inertial measurement unit, IMU), a lidar, a millimeter-wave radar, an ultrasonic radar, and an image shooting apparatus. In this application, the image shooting apparatus may include but is not limited to a fisheye camera and a wide-angle camera. The image shooting apparatus may include a red, green, and blue/infrared (red, green, and blue/infrared, RGB/IR) camera, or may include a depth camera, for example, a time of flight (time of flight, TOF) camera, a binocular camera, or a structured light camera.

Some or all functions of the intelligent driving device 100 may be controlled by the computing platform 150. The computing platform 150 may include processors 151 to 15n. The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types: A first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display and a central control screen. A head-up display is also referred to as a head-up display system, and is mainly configured to display driving information such as a speed and navigation on a display device (for example, a windshield) in front of a driver, to reduce line-of-sight transfer time of the driver, avoid a pupil change caused by line-of-sight transfer of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. The display apparatus may further include a human-machine interface (human-machine interface, HMI), configured to prompt a user of a switching status of a planning mode.

The intelligent driving device 100 may include an advanced driver assistance system (advanced driver assistance system, ADAS). The ADAS obtains information around the intelligent driving device by using a plurality of sensors (including but not limited to: a lidar, a millimeter-wave radar, an image shooting apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminding, to improve driving safety, automation, and comfort of the intelligent driving device.

In terms of logical functions, the ADAS usually includes three main functional modules: a sensing module, a decision-making module, and an execution module. The sensing module senses an environment around a vehicle body through the sensor, and inputs corresponding real-time data to a processing center of a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision signal from the decision-making module, the execution module takes a corresponding action, for example, driving, changing a lane, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at L1 to L3 are jointly completed by the driver and the system, and the driver needs to take over a dynamic driving task. L4 and L5 enable the driver to be completely transformed into a passenger. Currently, functions that can be implemented by the ADAS mainly include but are not limited to: adaptive cruise, automatic emergency braking, automatic parking, blind spot monitoring, traffic warning/braking for a front crossroad, traffic warning/braking for a rear crossroad, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, the automatic parking may include automatic parking assist (auto parking assist, APA), remote parking assist (remote parking assist, RPA), and automated valet parking (auto valet parking, AVP). For the APA, the driver does not need to operate a steering wheel, but still needs to monitor a status of the intelligent driving device in real time on the intelligent driving device. For the RPA, the driver may use a terminal (for example, a mobile phone) to remotely park the intelligent driving device outside the intelligent driving device. For the AVP, the intelligent driving device may complete parking without the driver. In terms of corresponding autonomous driving levels, the APA is approximately at a level of L2, the RPA is approximately at a level of L2 or L3, and the AVP is approximately at a level of L4.

In this embodiment of this application, the computing platform 150 may generate a plurality of temporary parking spaces based on obstacle information obtained by the sensing system 120, and display the plurality of temporary parking spaces to the user through the display apparatus. Further, the computing platform 150 may select one temporary parking space from the plurality of temporary parking spaces, and control the intelligent driving device to park into the temporary parking space.

The intelligent driving device in this embodiment of this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For ease of understanding, the following uses an example in which the intelligent driving device is a vehicle for description.

FIG. 2 is a diagram of an architecture of an intelligent driving system according to an embodiment of this application. As shown in FIG. 2, the system includes a sensing module 210, a planning and control module 220, a prompt module 230, and an executor 240. The sensing module 210 may include one or more sensors in the sensing system 120 shown in FIG. 1, the planning and control module 220 may include one or more processors in the computing platform 150 shown in FIG. 1, and the prompt module 230 may include one or more display apparatuses 130 shown in FIG. 1. The planning and control module 220 includes a temporary parking space generation module 221 and a temporary parking path planning module 222. The temporary parking space generation module 221 may generate one or more temporary parking spaces based on a sensing result of the sensing module 210. The temporary parking path planning module 222 may select one target temporary parking space from the one or more temporary parking spaces, and plan a traveling path of a vehicle from a current location to the target temporary parking space. The temporary parking path planning module 222 may further calculate a corresponding control value based on the planned traveling path, and output the control value to the executor 240. When the executor 240 executes the control value, the vehicle is controlled to travel based on the planned path. In some possible implementations, the executor may include a steering system and a braking control system in an intelligent driving device 100. In addition, the temporary parking space generation module 221 may further send information about the generated one or more temporary parking spaces to a parking space display module 231 in the prompt module 230, so that the parking space display module 231 displays the one or more temporary parking spaces.

More specifically, an image shooting apparatus in the sensing module 210 may obtain an image around the vehicle, and a detection-type sensor (for example, a lidar or a millimeter-wave radar) in the sensing module 210 detects surrounding obstacle information of the vehicle. Further, the sensing module 210 sends the image around the vehicle and/or the detected surrounding obstacle information of the vehicle to the temporary parking space generation module 221.

The temporary parking space generation module 221 may process the image, determine a visual parking space around the vehicle based on parking space line information, and determine one or more available parking spaces from the visual parking space as a temporary parking space. The available parking space may be understood as a parking space that is not occupied by an obstacle and/or is not intruded by the obstacle. The temporary parking space generation module 221 may alternatively generate n temporary parking spaces based on a visual parking space. In addition, the temporary parking space generation module 221 may alternatively generate m temporary parking spaces between the vehicle and an obstacle close to the vehicle based on the surrounding obstacle information of the vehicle. Further, information about the temporary parking space determined and/or generated by the temporary parking space generation module 221 is separately sent to the temporary parking path planning module 222 and the parking space display module 231, so that the temporary parking path planning module 222 selects one parking space from the temporary parking space as the target temporary parking space, and the parking space display module 231 may display the information about the temporary parking space.

It should be understood that the foregoing modules are merely examples. During actual application, the foregoing modules may be added or deleted according to an actual requirement. For example, in the system architecture shown in FIG. 2, the temporary parking space generation module 221 and the temporary parking path planning module 222 may be combined into one module.

The intelligent driving system provided in this application is described above with reference to FIG. 1 and FIG. 2. The following describes in detail an intelligent driving method provided in this application.

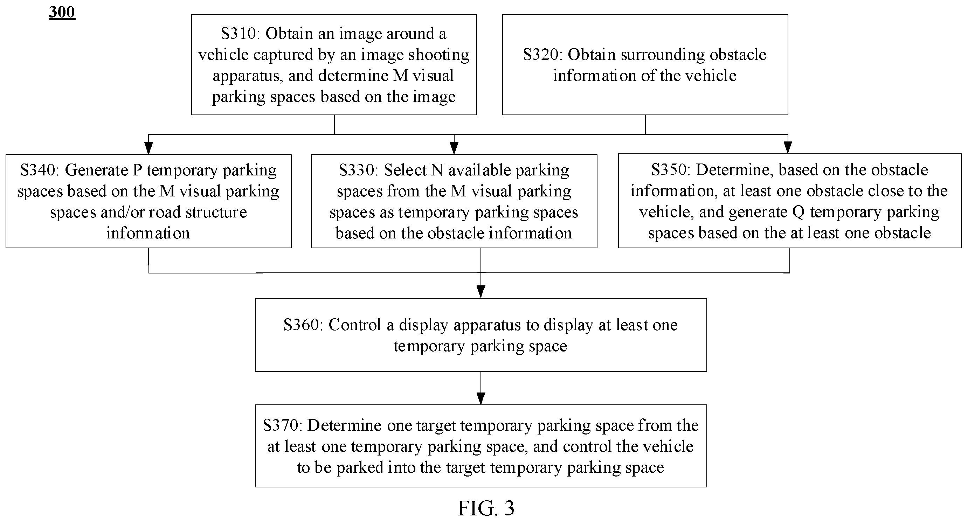

FIG. 3 is a schematic flowchart of an intelligent driving method according to an embodiment of this application. The method 300 shown in FIG. 3 may be performed by the intelligent driving device 100 shown in FIG. 1, for example, may be performed by the computing platform 150. Alternatively, the method 300 may be performed by the system shown in FIG. 2. Specifically, the method 300 may include some or all of steps S310 to S370.

S310: Obtain an image around a vehicle captured by an image shooting apparatus, and determine M visual parking spaces based on the image.

For example, the image shooting apparatus may include one or more image shooting apparatuses in the sensing system 120. For example, the image shooting apparatus may include one or more of the following: a front-view camera, a rear-view camera, and a side-view camera.

For example, the image includes a plurality of fisheye images. Determining the M visual parking spaces based on the image may include: splicing the plurality of fisheye images after performing inverse perspective mapping (inverse perspective mapping, IPM) on the plurality of fisheye images, detecting a spliced image, and extracting the M visual parking spaces based on a parking space line, a parking space corner, a parking space opening edge, and the like. M is an integer greater than or equal to 1.

In some implementations, if there is no visual parking space in the image, a road boundary of a traveling road of the vehicle may alternatively be determined based on the image. For example, the road boundary is determined based on a road shoulder (for example, a hard road shoulder or a soft road shoulder) in the image, or the road boundary may be determined based on a green belt or an isolation belt in the image.

S320: Obtain surrounding obstacle information of the vehicle.

For example, the obstacle information may be collected by a detection-type sensor of the vehicle. The detection-type sensor may include, for example, various radar sensors, or may include an infrared sensor, or the like.

S330: Select N available parking spaces from the M visual parking spaces as temporary parking spaces based on the obstacle information.

For example, when an obstacle intrudes a visual parking space, that is, a location of the obstacle overlaps a location of the visual parking space, it is determined that the visual parking space is an unavailable parking space; otherwise, it is determined that the parking space is an available parking space. N may be an integer greater than or equal to 0.

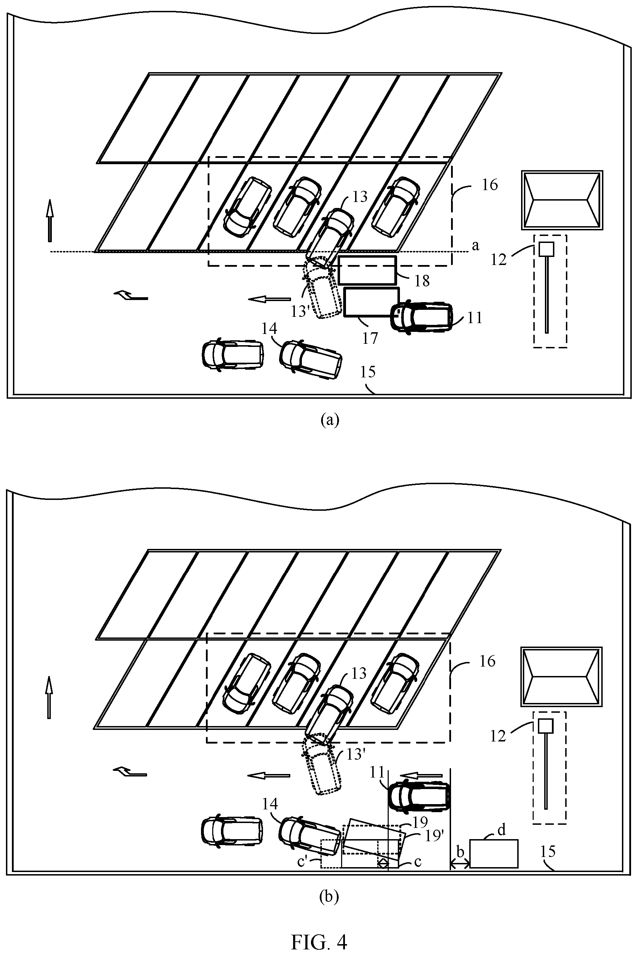

For example, as shown in (a) in FIG. 4, it is assumed that a vehicle 11 enters from an entrance gate 12. In a parking cruise process in a parking lot, an image of an area 16 may be obtained, and it is determined, based on the image of the area 16, that there are four visual parking spaces, and then it is determined, based on the obstacle information, that there is no available parking space.

S340: Generate P temporary parking spaces based on the M visual parking spaces and/or the road boundary.

P may be an integer greater than or equal to 1.

In some implementations, a road boundary 1 may be determined based on the visual parking space and/or road structure information, and then one temporary parking space is generated in each of the front and the rear of the vehicle based on the road boundary 1. A minimum distance between the temporary parking space and the road boundary 1 is greater than or equal to a distance threshold 1 and is less than a distance threshold 2. The minimum distance between the temporary parking space and the road boundary may be understood as a distance between the road boundary and an edge or a corner that is of the temporary parking space and that is closest to the road boundary.

For example, the temporary parking space may partially overlap or not overlap a current location of the vehicle. For example, a distance between each of the P temporary parking spaces and the vehicle in a direction parallel to a central axis of the vehicle may be greater than or equal to a preset threshold. For example, the preset threshold may be 15 centimeters or 20 centimeters.

For example, the distance threshold 1 may be 5 centimeters, 10 meters, or another value, and the distance threshold 2 may be 20 centimeters, 30 centimeters, or another value. During specific implementation, the distance threshold 2 may be determined based on a width of a road on which the vehicle is currently located.

In some implementations, a central axis of any one of the P temporary parking spaces may be parallel to the road boundary 1, or a central axis of any one of the P temporary parking spaces may be parallel to the central axis of the vehicle.

In this embodiment of this application, a central axis of a temporary parking space may be a straight line that passes through a center point of the temporary parking space and is parallel to a longer edge of the temporary parking space.

In some implementations, a distance between the road boundary 1 and a driver seat of the vehicle is greater than a distance between the road boundary 1 and a front passenger seat of the vehicle. In other words, when the vehicle is a left-hand drive vehicle, the road boundary 1 may be a road boundary on a right side of the vehicle; or when the vehicle is a right-hand drive vehicle, the road boundary 1 may be a road boundary on a left side of the vehicle.

For example, as shown in (a) in FIG. 4, when the vehicle 11 is a left-hand drive vehicle, a road boundary a may be determined based on the visual parking space in the area 16, and a temporary parking space 18 is generated in front of the vehicle 11. A minimum distance between the temporary parking space 18 and the road boundary a is greater than or equal to the distance threshold 1 and is less than the distance threshold 2.

For another example, as shown in (b) in FIG. 4, when the vehicle 11 is a right-hand drive vehicle, a road boundary b may be determined based on a wall 15, and a temporary parking space c' and a temporary parking space d are respectively generated in the front and the rear of the vehicle. Both a minimum distance between the temporary parking space c' and the road boundary b (namely, the wall 15) and a minimum distance between the temporary parking space d and the road boundary b (namely, the wall 15) are greater than or equal to the distance threshold 1 and are less than the distance threshold 2. In addition, in a direction parallel to a central axis of the vehicle, a distance between the temporary parking space c' and the vehicle 11 and a distance between the temporary parking space d and the vehicle 11 are both b. Because a location of the temporary parking space c' overlaps a location of a vehicle 14, a pose of the temporary parking space c' may be adjusted to a temporary parking space c based on the location of the vehicle 14, so that the generated temporary parking space c is in an available state.

S350: Determine, based on the obstacle information, at least one obstacle close to the vehicle, and generate Q temporary parking spaces based on the at least one obstacle.

Q may be an integer greater than or equal to 1.

For example, the at least one obstacle may include an obstacle closest to the vehicle, or may include an obstacle closest to the vehicle in a traveling direction of the vehicle, or may include an obstacle closest to the vehicle in a front side or a rear side of the vehicle.

In some implementations, a distance between each of the Q temporary parking spaces and a road boundary 2 is greater than a distance between each of the Q temporary parking spaces and a road boundary 3. The road boundary 2 is a boundary close to the driver seat of the vehicle, and the road boundary 3 is a boundary close to the front passenger seat of the vehicle. A distance between a temporary parking space and a road boundary may be a distance between a center point of the temporary parking space and the road boundary, or may be a distance between a central axis of the temporary parking space and the road boundary.

For example, when the vehicle is a left-hand drive vehicle, the road boundary 2 is a left boundary of a traveling road of the vehicle, and the road boundary 3 is a right boundary of the traveling road of the vehicle. When the vehicle is a right-hand drive vehicle, the road boundary 2 is a right boundary of a traveling road of the vehicle, and the road boundary 3 is a left boundary of the traveling road of the vehicle.

In some implementations, if there is an obstacle in the front/a front side (or the rear/a side rear) of the vehicle, based on an obstacle closest to the vehicle in the front/front side of the vehicle, one temporary parking space is generated between the obstacle and the vehicle. For example, the front side (or the side rear) may be a front side (or a side rear) away from a driver side of the vehicle.

In an example, as shown in (a) in FIG. 4, there is a parked vehicle 14 in a left front of the vehicle 11, and presence of a vehicle 13 and the vehicle 14 prevents the vehicle 11 from continuing to travel forward. If the vehicle 11 is a left-hand drive vehicle, the vehicle 13 located at a location 13' (referred to as a vehicle 13' for short below) may be used as a closest obstacle of the vehicle 11, and a temporary parking space 17 is generated between the vehicle 13' and the vehicle 11. A distance between the temporary parking space 17 and the vehicle 13' is greater than or equal to a distance threshold 3 and is less than a distance threshold 4.

In another example, as shown in (b) in FIG. 4, if the vehicle 11 is a right-hand drive vehicle, the vehicle 14 may alternatively be used as a closest obstacle of the vehicle 11, and a temporary parking space 19 is generated between the vehicle 14 and the vehicle 11. Further, a pose of the temporary parking space 18 may be further adjusted based on a pose of the vehicle 14. For example, the pose of the temporary parking space 19 is adjusted to a temporary parking space 19', so that a central axis of the temporary parking space 19' is parallel to a central axis of the vehicle 14.

In some implementations, if there is one closest obstacle in front of the vehicle and one closest obstacle behind the vehicle, one temporary parking space is generated between the vehicle and each of the closest obstacles.

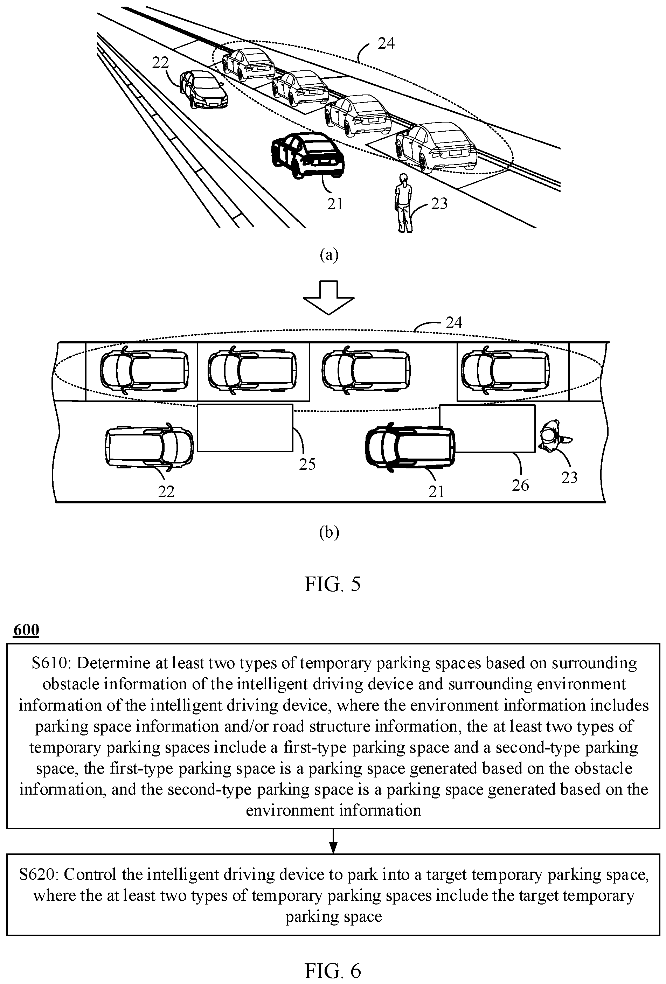

As shown in (a) in FIG. 5, an example in which both a vehicle 21 and a vehicle 22 are left-hand drive vehicles is used. In a process in which the vehicle 21 travels on a road, there is the traveling vehicle 22 in front of the vehicle 21 and a pedestrian 23 behind the vehicle 21, and a plurality of vehicles 24 are parked on a right side of the vehicle 21. In a process in which the vehicle 21 meets the vehicle 22, because there are the plurality of vehicles 24, drivable space for the vehicle 21 is small. In this case, as shown in (b) in FIG. 5, based on locations of the vehicle 22 and the pedestrian 23, the vehicle 21 may generate a temporary parking space 25 between the vehicle 21 and the vehicle 22, and generate a temporary parking space 26 between the vehicle 21 and the traveling 23. A distance between the temporary parking space 25 and the vehicle 22 is greater than or equal to the distance threshold 3 and is less than the distance threshold 4. A distance between the temporary parking space 26 and the vehicle 22 is greater than or equal to the distance threshold 3 and is less than the distance threshold 4. In addition, locations of the temporary parking spaces 25 and 26 may further satisfy: A distance from a roadside visual parking space is greater than or equal to the distance threshold 1 and is less than the distance threshold 2. Alternatively, locations of the temporary parking spaces 25 and 26 may further satisfy: A distance from a right-side road boundary of the vehicle 21 is less than a distance from a left-side road boundary of the vehicle 21.

S360: Control a display apparatus to display at least one temporary parking space.

The at least one temporary parking space includes at least one of the following: the N available parking spaces, the P temporary parking spaces, or the Q temporary parking spaces.

In an example, when there is no available visual parking space, the display apparatus may display only the P temporary parking spaces and/or the Q temporary parking spaces. When there is no obstacle in all of the front, the rear, a front side, and a rear side of the vehicle, so that Q temporary parking spaces are not generated, the display apparatus may display only the N available parking spaces and/or the P temporary parking spaces.

S370: Determine one target temporary parking space from the at least one temporary parking space, and control the vehicle to park into the target temporary parking space.

It should be noted that, during actual implementation, one or more of the following: S330, S340, and S350 may be performed as appropriate.

According to the intelligent driving method provided in this embodiment of this application, a plurality of types of parking spaces are determined as candidate parking spaces for temporary parking of the intelligent driving device, so that when the intelligent driving device is blocked by an obstacle in a traveling or parking process, the obstacle can be avoided in a more flexible and human-like manner.

FIG. 6 is another example flowchart of an intelligent driving method according to an embodiment of this application. The method 600 may be performed by the intelligent driving device 100 shown in FIG. 1, for example, may be performed by the computing platform 150. Alternatively, the method 600 may be performed by the system shown in FIG. 2. Specifically, the method 600 may include S610 and S620.

S610: Determine at least two types of temporary parking spaces based on surrounding obstacle information of the intelligent driving device and surrounding environment information of the intelligent driving device, where the environment information includes parking space information and/or road structure information, the at least two types of temporary parking spaces include a first-type parking space and a second-type parking space, the first-type parking space is a parking space generated based on the obstacle information, and the second-type parking space is a parking space generated based on the environment information.

For example, the obstacle information may be collected by a detection-type sensor of the intelligent driving device. The detection-type sensor may include, for example, various radar sensors, or may include an infrared sensor. The parking space information and/or the road structure information may be determined based on an image captured by an image shooting apparatus of the intelligent driving device. The image may include the image in the method 300. The parking space information may indicate the M visual parking spaces in the method 300. The road structure information may indicate a road boundary of a road on which the intelligent driving device travels.

For example, the first-type parking space includes the Q temporary parking spaces in the foregoing embodiments, and the second-type parking space includes the P temporary parking spaces in the foregoing embodiments.

In some implementations, the method includes: determining a first obstacle based on the obstacle information, where the first obstacle is an obstacle that is in a first area and that is closest to the intelligent driving device; and the first area is located directly in front of the intelligent driving device and/or the first area is located in a front side away from a driver side of the intelligent driving device, or the first area is located directly behind the intelligent driving device and/or the first area is located in a rear side away from a driver side of the intelligent driving device; and generating a first temporary parking space based on the first obstacle, where the first temporary parking space is located between the first obstacle and the intelligent driving device, a distance between the first temporary parking space and the first obstacle is greater than or equal to a first distance threshold and is less than a second distance threshold, and the first temporary parking space is the first-type parking space.

For example, the first distance threshold may be the distance threshold 3 in the foregoing embodiments, and the second distance threshold may be the distance threshold 4 in the foregoing embodiments.

In some implementations, when the first obstacle is a vehicle, a central axis of the first temporary parking space is parallel to a central axis of the first obstacle, or an included angle between a central axis of the first temporary parking space and a central axis of the first obstacle is less than or equal to a first angle threshold.

For example, the first angle threshold may be 5 degrees (degrees, °), 3°, or another value.

In some implementations, a distance between the first temporary parking space and a first road boundary is greater than a distance between the first temporary parking space and a second road boundary, the first road boundary is a boundary close to a driver seat of the intelligent driving device, and the second road boundary is a boundary close to a front passenger seat of the intelligent driving device.

For example, the first road boundary may be the road boundary 2 in the foregoing embodiments, and the second road boundary may be the road boundary 3 in the foregoing embodiments.

For example, the first obstacle may include any one of the vehicle 13' and the vehicle 14 that are shown in FIG. 4, and the vehicle 22 and the pedestrian 23 that are shown in FIG. 5. Further, the first area is an area including the foregoing obstacle. When the first obstacle is the vehicle 13', the vehicle 14, the vehicle 22, or the pedestrian 23, the first temporary parking space may be respectively a parking space 17, a parking space 19 (or 19'), a parking space 25, or a parking space 26.

In some implementations, the method further includes: determining a third road boundary based on the parking space information and/or the road structure information; and generating a second temporary parking space based on the third road boundary, where the second temporary parking space is located in front of or behind the intelligent driving device, the second temporary parking space does not overlap or partially overlaps a current location of the intelligent driving device, a distance between the second temporary parking space and the third road boundary is greater than or equal to a third distance threshold and is less than a fourth distance threshold, and the second temporary parking space is the second-type parking space.

In some implementations, a distance between the third road boundary and the driver seat of the intelligent driving device is greater than a distance between the third road boundary and the front passenger seat of the intelligent driving device.

For example, the third distance threshold may be the distance threshold 1 in the foregoing embodiments, and the fourth distance threshold may be the distance threshold 2 in the foregoing embodiments. The third road boundary may be the road boundary 1.

In some implementations, a central axis of the second temporary parking space is parallel to a central axis of the intelligent driving device, or an included angle between a central axis of the second temporary parking space and a central axis of the intelligent driving device is less than or equal to a second angle threshold.

For example, the second angle threshold may be 5°, 3°, or another value.

For example, the second temporary parking space may include any one of the following: the parking space 18, the parking space c, and the parking space d that are shown in FIG. 4, and the parking space 25 and the parking space 26 that are shown in FIG. 5.

S620: Control the intelligent driving device to park into a target temporary parking space, where the at least two types of temporary parking spaces include the target temporary parking space.

In some implementations, the method 600 is performed when the intelligent driving device meets a target vehicle. For example, the target vehicle may be the vehicle 22 shown in FIG. 5.

In some implementations, the at least two types of temporary parking spaces further include a third-type parking space, and the third-type parking space is an empty parking space determined based on the parking space information. For example, the third-type parking space includes the N available parking spaces in the foregoing embodiments.

In some implementations, the method further includes: controlling a display apparatus to display the at least two types of temporary parking spaces.

In some implementations, before controlling the intelligent driving device to park into the target temporary parking space, the method further includes: determining the target temporary parking space based on a degree of blockage that each of the at least two types of temporary parking spaces causes to a road on which the intelligent driving device is located.

For example, a degree of blocking, by a temporary parking space, the road on which the intelligent driving device is located may be determined based on a location of the temporary parking space on the road. For example, a closer distance between the temporary parking space and a road center indicates a higher degree of blocking the road by the temporary parking space. Further, one of the at least two types of temporary parking spaces with a lowest degree of blocking the road is determined as the target temporary parking space.

According to the intelligent driving method provided in this embodiment of this application, when a vehicle encounters scenarios, for example, meeting oncoming traffic in a narrow lane or avoiding obstacles, a more appropriate temporary parking location can be determined. This improves a human-like nature and intelligence of the vehicle, and helps reduce a probability of obstructing traffic due to stranding of the vehicle caused by blocking of an obstacle.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

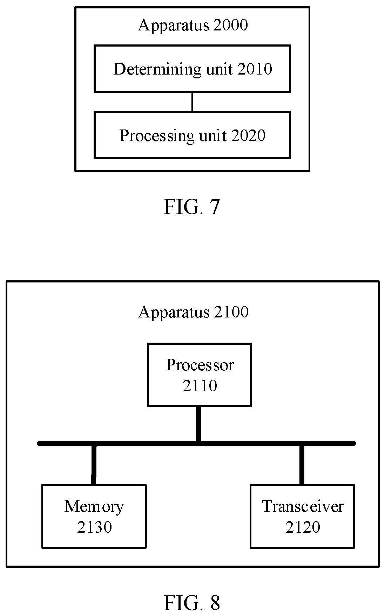

With reference to FIG. 1 to FIG. 6, the rear-view mirror detection method provided in embodiments of this application is described above in detail. With reference to FIG. 7 and FIG. 8, the following describes in detail a rear-view mirror detection apparatus provided in embodiments of this application. It should be understood that descriptions of the apparatus embodiments correspond to descriptions of the method embodiments. Therefore, for content that is not described in detail, refer to the foregoing method embodiments. For brevity, details are not described herein again.

FIG. 7 is a block diagram of an apparatus 2000 for intelligent driving according to an embodiment of this application. The apparatus 2000 may include units configured to perform the method 300 or the method 600. In addition, the units in the apparatus 2000 are used to implement corresponding procedures in embodiments of the method 300 or the method 600.

The apparatus 2000 includes a determining unit 2010 and a processing unit 2020, and the determining unit 2010 and the processing unit 2020 may be configured to implement a corresponding processing function, for example, determining at least two types of temporary parking spaces and controlling an intelligent driving device to park into a target temporary parking space.

Optionally, the apparatus 2000 may further include a transceiver unit, and the transceiver unit may be configured to implement a corresponding receiving and sending function, for example, obtaining surrounding obstacle information of the intelligent driving device, parking space information, and/or road structure information.

Optionally, the apparatus 2000 further includes a storage unit. The storage unit may be configured to store instructions and/or data. The processing unit 2010 may read the instructions and/or the data in the storage unit, so that the apparatus implements related actions in the foregoing method embodiments.

It should be understood that a specific process of performing the foregoing corresponding steps by each unit is described in detail in the foregoing method embodiments, for example, a method for determining at least one temporary parking space. For brevity, details are not described herein again.

For example, the determining unit 2010 and the processing unit 2020 may be disposed in the system shown in FIG. 2. More specifically, the determining unit 2010 and the processing unit 2020 may be disposed in the planning and control module 220. More specifically, the determining unit 2010 may be disposed in the temporary parking space generation module 221, and the processing unit 2020 may be disposed in the temporary parking path planning module 222. For example, the operations performed by the determining unit 2010 and the processing unit 2020 may be performed by one processor, or may be performed by different processors. In a specific implementation process, the one or more processors may be processors disposed in the intelligent driving device 100 shown in FIG. 1, or the apparatus 2000 may be a chip disposed in the intelligent driving device 100.

In a specific implementation process, all or some of the units in the foregoing apparatus may be integrated together, or may be implemented independently. In an implementation, these units are integrated together and implemented in a form of system-on-a-chip (system-on-a-chip, SoC).

FIG. 8 is another block diagram of an apparatus for intelligent driving according to an embodiment of this application. The apparatus 2100 shown in FIG. 8 may include a processor 2110, a transceiver 2120, and a memory 2130. The processor 2110, the transceiver 2120, and the memory 2130 are connected to each other through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses, for example, but is not limited to, a transceiver apparatus of a transceiver type, to implement communication between the apparatus 2100 and another device or a communication network, to receive/send data/information for implementing the methods in the foregoing embodiments.

An embodiment of this application further provides a computing platform. The computing platform includes the apparatus 2000 or the apparatus 2100 in the foregoing embodiments.

An embodiment of this application further provides an intelligent driving device. The intelligent driving device includes the computing platform in the foregoing embodiments, or the intelligent driving device includes the apparatus 2000 or the apparatus 2100 in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are merely used to distinguish between different described objects, and do not limit a location, a sequence, a priority, a quantity, content, or the like of the described object. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation.

In several embodiments provided in this application, it should be understood that the disclosed system, apparatus, and method may be implemented in other manners. For example, the described apparatus embodiments are merely examples. For example, division of the units is merely logic function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, to be specific, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An intelligent driving method, comprising:
determining at least two types of temporary parking spaces based on surrounding obstacle information of an intelligent driving device and surrounding environment information of the intelligent driving device, wherein
the environment information comprises parking space information and/or road structure information; and
the at least two types of temporary parking spaces comprise a first-type parking space and a second-type parking space, the first-type parking space is a parking space generated based on the obstacle information, and the second-type parking space is a parking space generated based on the environment information; and
controlling the intelligent driving device to park into a target temporary parking space, wherein the at least two types of parking spaces comprise the target temporary parking space.

2. The method according to claim 1, wherein the method further comprises:
determining a first obstacle based on the obstacle information, wherein the first obstacle is an obstacle that is in a first area and that is closest to the intelligent driving device; and the first area is located directly in front of the intelligent driving device and/or the first area is located in a front side away from a driver side of the intelligent driving device, or the first area is located directly behind the intelligent driving device and/or the first area is located in a rear side away from a driver side of the intelligent driving device; and
generating a first temporary parking space based on the first obstacle, wherein the first temporary parking space is located between the first obstacle and the intelligent driving device, a distance between the first temporary parking space and the first obstacle is greater than or equal to a first distance threshold and is less than a second distance threshold, and the first temporary parking space is the first-type parking space.

3. The method according to claim 2, wherein when the first obstacle is a vehicle, a central axis of the first temporary parking space is parallel to a central axis of the first obstacle, or an included angle between a central axis of the first temporary parking space and a central axis of the first obstacle is less than or equal to a first angle threshold.

4. The method according to claim 2 or 3, wherein a distance between the first temporary parking space and a first road boundary is greater than a distance between the first temporary parking space and a second road boundary, the first road boundary is a boundary close to a driver seat of the intelligent driving device, and the second road boundary is a boundary close to a front passenger seat of the intelligent driving device.

5. The method according to any one of claims 1 to 4, wherein the method further comprises:
determining a third road boundary based on the parking space information and/or the road structure information; and
generating a second temporary parking space based on the third road boundary, wherein the second temporary parking space is located in front of or behind the intelligent driving device, the second temporary parking space does not overlap or partially overlaps a current location of the intelligent driving device, a distance between the second temporary parking space and the third road boundary is greater than or equal to a third distance threshold and is less than a fourth distance threshold, and the second temporary parking space is the second-type parking space.

6. The method according to claim 5, wherein a central axis of the second temporary parking space is parallel to a central axis of the intelligent driving device, or an included angle between a central axis of the second temporary parking space and a central axis of the intelligent driving device is less than or equal to a second angle threshold.

7. The method according to claim 5 or 6, wherein a distance between the third road boundary and the driver seat of the intelligent driving device is greater than a distance between the third road boundary and the front passenger seat of the intelligent driving device.

8. The method according to any one of claims 1 to 7, wherein the at least two types of temporary parking spaces further comprise a third-type parking space, and the third-type parking space is an empty parking space determined based on the parking space information.

9. The method according to any one of claims 1 to 8, wherein the determining the at least two types of temporary parking spaces comprises:
determining the at least two types of temporary parking spaces when the intelligent driving device meets a target vehicle.

10. The method according to any one of claims 1 to 9, wherein the method further comprises:
before controlling the intelligent driving device to park into the target temporary parking space, determining the target temporary parking space based on a degree of blockage that each of the at least two types of temporary parking spaces causes to a road on which the intelligent driving device is located.

11. The method according to any one of claims 1 to 10, wherein the method further comprises:
controlling a display apparatus to display the at least two types of temporary parking spaces.

12. An apparatus for intelligent driving, comprising:
a determining unit, configured to determine at least two types of temporary parking spaces based on surrounding obstacle information of an intelligent driving device and surrounding environment information of the intelligent driving device, wherein
the environment information comprises parking space information and/or road structure information; and
the at least two types of temporary parking spaces comprise a first-type parking space and a second-type parking space, the first-type parking space is a parking space generated based on the obstacle information, and the second-type parking space is a parking space generated based on the parking space information and/or the road structure information; and
a processing unit, configured to control the intelligent driving device to park into a target temporary parking space, wherein the at least two types of temporary parking spaces comprise the target temporary parking space.

13. The apparatus according to claim 12, wherein the determining unit is further configured to:
determine a first obstacle based on the obstacle information, wherein the first obstacle is an obstacle that is in a first area and that is closest to the intelligent driving device; and the first area is located directly in front of the intelligent driving device and/or the first area is located in a front side away from a driver side of the intelligent driving device, or the first area is located directly behind the intelligent driving device and/or the first area is located in a rear side away from a driver side of the intelligent driving device; and
the apparatus further comprises a generation unit, configured to generate a first temporary parking space based on the first obstacle, wherein the first temporary parking space is located between the first obstacle and the intelligent driving device, a distance between the first temporary parking space and the first obstacle is greater than or equal to a first distance threshold and is less than a second distance threshold, and the first temporary parking space is the first-type parking space.

14. The apparatus according to claim 13, wherein when the first obstacle is a vehicle, a central axis of the first temporary parking space is parallel to a central axis of the first obstacle, or an included angle between a central axis of the first temporary parking space and a central axis of the first obstacle is less than or equal to a first angle threshold.

15. The apparatus according to claim 13 or 14, wherein a distance between the first temporary parking space and a first road boundary is greater than a distance between the first temporary parking space and a second road boundary, the first road boundary is a boundary close to a driver seat of the intelligent driving device, and the second road boundary is a boundary close to a front passenger seat of the intelligent driving device.

16. The apparatus according to any one of claims 12 to 15, wherein the determining unit is further configured to:
determine a third road boundary based on the parking space information and/or the road structure information; and
the apparatus further comprises the generation unit, configured to generate a second temporary parking space based on the third road boundary, wherein the second temporary parking space is located in front of or behind the intelligent driving device, the second temporary parking space does not overlap or partially overlaps a current location of the intelligent driving device, a distance between the second temporary parking space and the third road boundary is greater than or equal to a third distance threshold and is less than a fourth distance threshold, and the second temporary parking space is the second-type parking space.

17. The apparatus according to claim 16, wherein a central axis of the second temporary parking space is parallel to a central axis of the intelligent driving device, or an included angle between a central axis of the second temporary parking space and a central axis of the intelligent driving device is less than or equal to a second angle threshold.

18. The apparatus according to claim 16 or 17, wherein a distance between the third road boundary and the driver seat of the intelligent driving device is greater than a distance between the third road boundary and the front passenger seat of the intelligent driving device.

19. The apparatus according to any one of claims 12 to 18, wherein the at least two types of temporary parking spaces further comprise a third-type parking space, and the third-type parking space is an empty parking space determined based on the parking space information.

20. The apparatus according to any one of claims 12 to 19, wherein the determining unit is further configured to:
determine the at least two types of temporary parking spaces when the intelligent driving device meets a target vehicle.

21. The apparatus according to any one of claims 12 to 20, wherein the determining unit is further configured to:
before the processing unit controls the intelligent driving device to park into the target temporary parking space, determine the target temporary parking space based on a degree of blockage that each of the at least two types of temporary parking spaces causes to a road on which the intelligent driving device is located.

22. The method according to any one of claims 12 to 21, wherein the processing unit is further configured to:
control a display apparatus to display the at least two types of temporary parking spaces.

23. An apparatus for intelligent driving, comprising:
a memory, configured to store a computer program; and
a processor, configured to execute the computer program stored in the memory, to enable the apparatus to perform the method according to any one of claims 1 to 11.

24. An intelligent driving device, wherein the intelligent driving device comprises the apparatus according to any one of claims 12 to 23.

25. A computer-readable storage medium, wherein the computer-readable storage medium stores instructions, and when the instructions are executed by a processor, the processor is enabled to implement the method according to any one of claims 1 to 11.

26. A chip, wherein the chip comprises a circuit, and the circuit is configured to perform the method according to any one of claims 1 to 11.
